# EUROPEAN PATENT SPECIFICATION

(11) **EP 1 609 344 B1**
(45) Date of publication and mention of the grant of the patent: **24.01.2007**
(21) Application number: 05104958.3
(22) Date of filing: 07.06.2005
(51) Int. Cl.: A01B 59/042

(54) **Hook-type hitch for trailers**
Hakenartige Anhängerkupplung
Accouplage de type crochet pour remorque

(30) Priority: 25.06.2004 IT MO20040161
(43) Date of publication of application: 28.12.2005
(73) Proprietor: CBM S.p.A., 41100 Modena (IT)
(72) Inventor: CORNIA, Enrico Maria, 41100, MODENA (IT)
(74) Representative: Modiano, Micaela Nadia

(56) References cited:
- AU-B2- 433 557
- DE-B3- 10 257 595
- GB-A- 2 186 174
- US-A- 5 692 573

## Description

The present invention relates to a hook-type hitch for trailers, i.e., to a set of mechanical elements that is applied to the rear of the structure of a self-propelled vehicle, for example a tractor, in which the trailer towing element is constituted by a rear hook, which is directed upward and is allowed to oscillate on the vertical plane in order to enter from below the front end eye of the drawbar of said trailer, in which it must mate stably for towing (e.g. see DE-B3-10257595).

The background art comprises a hook-type hitch that is constituted by two brackets installed in the rear part of the structure of a self-propelled vehicle: an upper one, which is substantially horizontal and protrudes backward along the centerline, and a lower one, which is pivoted to the front end of the first one and is provided, at the opposite end, with said hook, which is provided with a shank that is inserted in a longitudinal slider, which can move along a guide that constitutes the framework of said bracket and can be moved upward in an angular fashion, in order to seek from below the eye of the drawbar, until it reaches the closed position in a parallel mating with the upper bracket; the towing force generated by said hook in order to tow the trailer is transmitted from the lower bracket to the upper bracket by means of a device that is constituted by an element for transmitting the force of the hook, which is formed by a prism-like head that has a vertical axis and protrudes elastically from an opening of the upper wall of said slider, in which said head can slide vertically with play, and the rear face of which engages the front face of an abutment element, constituted by a plate that is welded onto the lower face of the surface of said upper bracket in order to transmit the towing force directly to the structure of the self-propelled vehicle.

However, such a device for the transmission and abutment of the towing force between the lower bracket and the upper bracket has the drawback that it does not withstand for long the repeated violent towing forces: this occurs because of early failure of the abutment element constituted by the plate welded to the upper bracket, which forces onerous interruptions of work in order to replace the entire expensive assembly of the two brackets. Since there is also the drawback of jammings of the prism-like head of the transmission element in its vertical seat formed within the thickness of the upper part of the slider, in which said head must instead slide without hindrance, except for normal friction, said jammings cause consequent violent stresses and even hindrances and delays in the normal execution of the maneuvers related to the mating of the tractor and the trailer.

This background art is susceptible of considerable improvements aimed at eliminating the severe drawbacks mentioned above.

The above situation leads to the need to solve the technical problem of finding a hitch of the type constituted by a lower oscillating bracket, which is provided with a hook that can be elongated backward and is coupled in a hinge-like manner at the front to an upper bracket that is fixed to the structure of the tractor, in which the coupling for the transmission and abutment of the towing force is constituted by removable elements that are suitable respectively to prevent any failure, breakage and/or jamming thereof in said brackets.

The invention as claimed solves the above-described technical problem by adopting, in the hitch, between the movable part and the fixed part, a coupling in which the abutment element is constituted by an element that has an L-shaped profile, in which the upper surface of its longer part is coupled by way of fastening means to the lower face of the surface of the fixed upper bracket, with its shorter part directed upward and inserted in a transverse vertical slot of said surface; the vertical rear end face of said shorter part being firmly coupled to the rear face of said slot; the towing force being applied to the front vertical face of said element having an L-shaped profile by mating with the rear vertical face of said prism-like head (which protrudes elastically upward from the slider of the lower bracket) of the element for transmitting said force from the hook to the tractor.

Further, the opening provided in the thickness of the upper part of said slider, which constitutes a prism-like seat for the vertical sliding therein of said prism-like head, has play toward the flat rear face and toward the two flat sides of said head, whereas when the towing force is transmitted, its front face mates, in a substantially articulated manner, with the corresponding flat face of said prism-like head even when no alignment has occurred; for this purpose, said front face is constituted by a convex sector provided with a cylindrical surface with a vertical axis and a radius that is conveniently large so as to mate without jamming.

The advantages achieved by this invention are: preservation of the strength of the device for transmission and abutment of the towing force, avoiding deformations and breakages that entail the need to replace the brackets, with consequent high purchase costs and losses due to work stops; elimination of the jammings of the device for transmitting the force between said prism-like head and the corresponding seat formed in the thickness of the upper part of the slider, generally caused by substantial misalignments between the axis of the bracket assembly and the drawbar of the trailer during the maneuvers of the tractor.

One embodiment of the invention is shown in the four accompanying drawings, wherein:

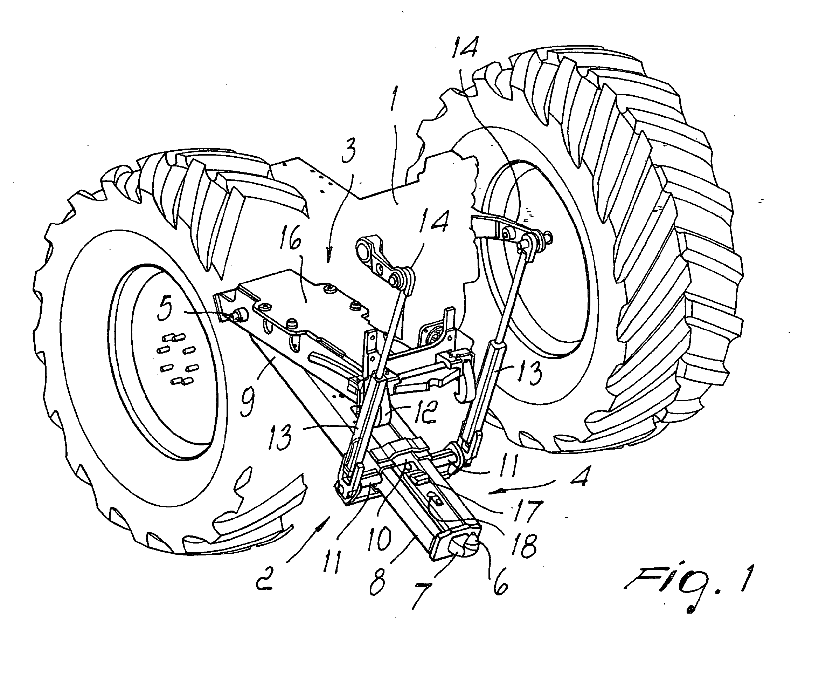

Figure 1 is a partial and discontinuous perspective view, taken from the left, of the rear part of the towing machine vehicle provided with a conventional towing assembly with a oscillating lower bracket, provided with a towing hook, in the open position and designed to be closed, by angular upward movement, in the maneuver for mating said hook with the eye with which the end, not shown, of the drawbar of any trailer is provided at the front, against a substantially horizontal upper bracket, which is fixed to the rear structure of said towing machine and is provided with a suitable pair of hooks, which can be actuated by means of a pair of actuators in order to anchor stably therein said lower bracket;
Figure 2 is a perspective view, taken from the right, of the towing assembly, limited to the two brackets, which are mutually pivoted at the front: the upper one is fixed and substantially horizontal and is shown partially and in cross-section in order to illustrate the position therein of an abutment element that is part of the device according to the invention, and the lower oscillating one is provided with a corresponding appropriate element for transmitting the towing force imparted by the hook, when the two brackets are kept in the closed position by means of such pair of hooks;

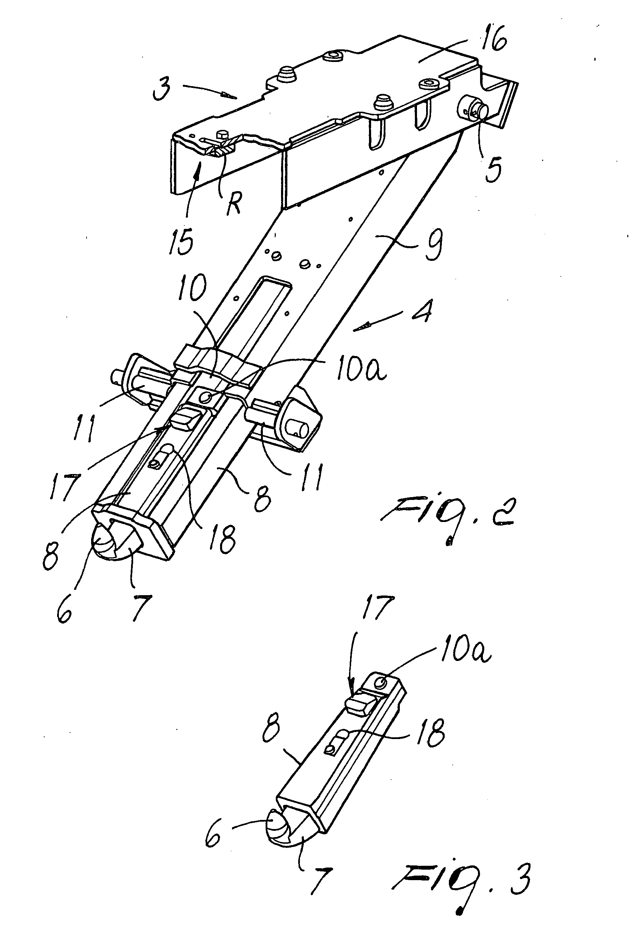

Figure 3 is a perspective view of the hook provided with a front shank, which is inserted in a slider that is actuated slidingly and longitudinally within a pair of guides of the lower bracket by means of an actuator;
Figures 4 and 5 are enlarged-scale views of details of the rear end, shown partially and in cross-section, of the fixed bracket of Figure 2 in order to highlight more clearly the characteristics of the abutment device;
Figure 6 is a partial enlarged-scale sectional view, taken along a longitudinal vertical plane, of such two brackets in the closed position but before the mating between the transmission device and the abutment device;

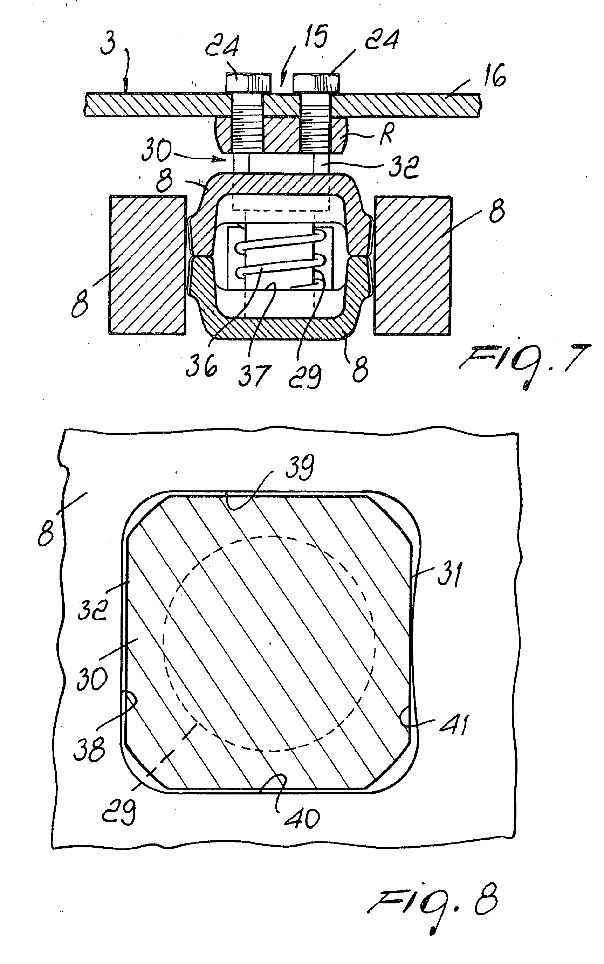

Figure 7 is a transverse sectional view, taken along the vertical line VII-VII of Figure 6, at the means for fastening the abutment device to the fixed bracket;
Figure 8 is a horizontal sectional view, taken along the line VIII-VIII in the upper part of the device for transmitting the towing force from the shank of the hook to such abutment device, in order to illustrate more clearly the plano-cylindrical mating between the front face of the transmission element and the front face of the corresponding seat.

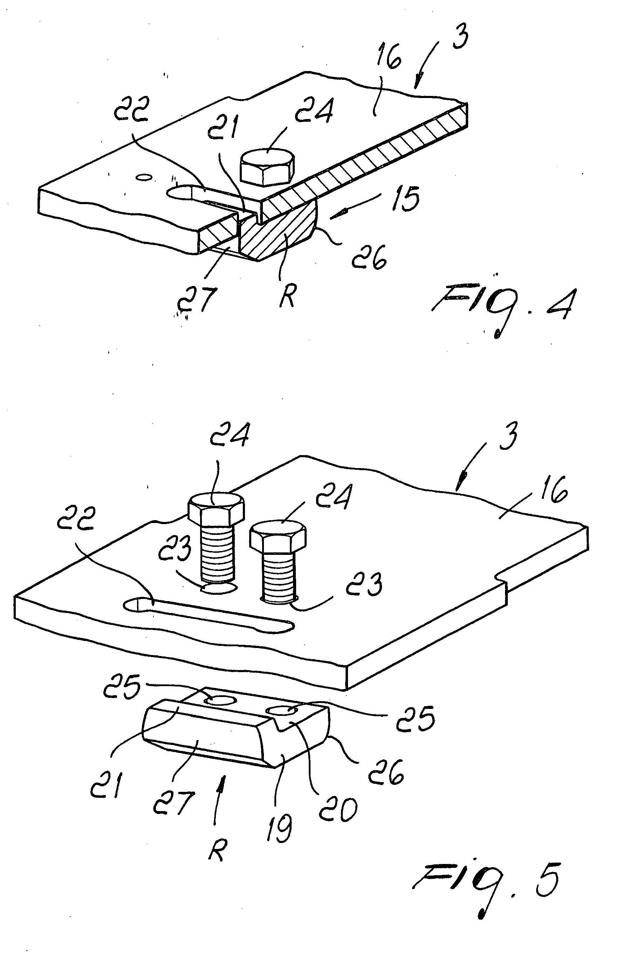

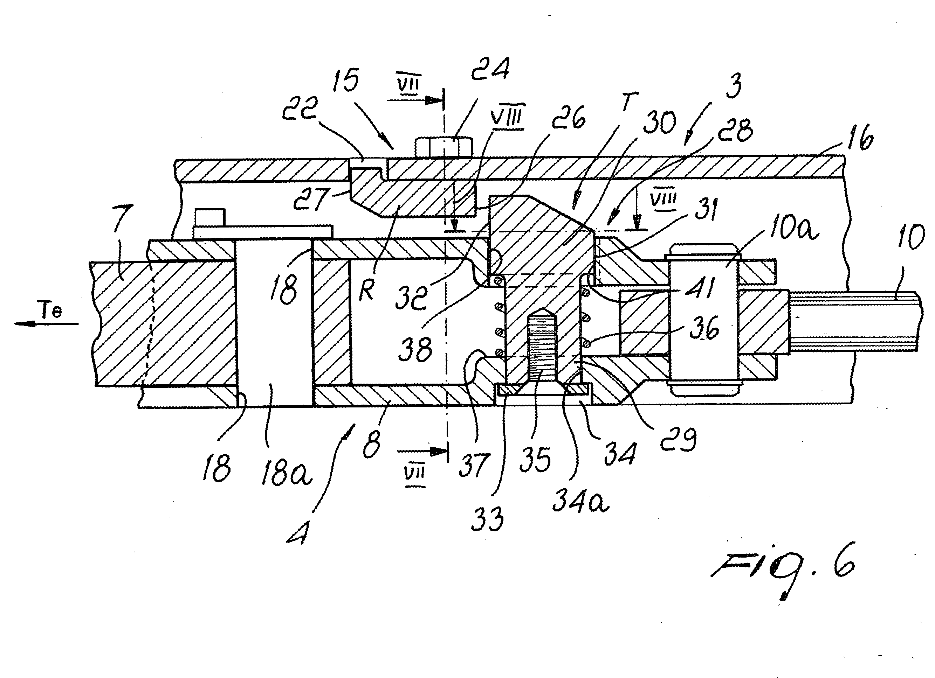

The reference numeral 1 designates the rear structure of the towing vehicle, which is provided, at the rear with respect to the direction of travel, with a conventional towing assembly 2, which is mainly constituted by an upper bracket 3, which is substantially horizontal and fixed to the rear structure 1, and by a lower oscillating bracket 4, which is pivoted at the front to the upper bracket 3 by means of the pivot 5; the reference numeral 6 designates the towing hook of the trailer, which is provided with a prism-like front shank 7, which is inserted longitudinally and is pivoted vertically in the box-like structure of the slider 8, which can slide longitudinally within the guiding frame 9 by means of an axial actuator 10, which is coupled to said slider for example by means of a vertical pivot 10a, all of these components being part of the lower bracket 4; the reference numeral 11 designates a pair of cylindrical arms, which protrude laterally from the lower bracket 4 for the mating thereon of the pair of hooks 12 with which the upper bracket 3 is provided at the rear, so as to achieve the closure of the pair of brackets 3 and 4 of the hitch by means of a pair of substantially vertical actuators 13, which are interposed between the pair of arms 14 that protrude backward from the rear structure 1 of the tractor and the lower bracket 4, in order to perform the vertical movements for opening and closing the hitch, respectively so as to achieve the insertion of the hook 6 from below in the end eye of the drawbar of the trailer and make their mutual coupling stable, with said eye of the drawbar articulated cylindrically with respect to the axis of said drawbar; the reference numeral 15 (Figure 2) designates the abutment device that lies directly below the upper surface 16 of the upper bracket 3, to which it is fixed detachably; the reference numeral 17 designates the force transmission device, which is inserted vertically and elastically in the slider 8; the reference numeral 18 designates a vertical through hole for fixing with play the shank 7 of the hook 6 in the slider 8 by means of a vertical element 18a (Figure 6); the reference numeral 19 (Figures 4 and 5) designate the sides of the abutment element R for the force of the hook 6, which has an L-shaped longitudinal profile, a horizontal body provided with an upper surface 20 and a vertical tab 21 designed to enter the transverse slot 22 of the upper surface 16 of the upper bracket 3; the reference numeral 23 designates a pair of vertical holes of the upper surface 16, which are parallel and located forward with respect to the slot 22, for the passage in said holes of the stem of the pair of screws 24 engaged in the respective threaded holes 25 of the abutment element R, so as to keep it clamped against the lower face of the upper surface 16 of the upper bracket 3; the reference numerals 26 and 27 designate the front face and the rear face of the abutment element R for transmitting the force that arrives, at said front face, from the hook 6 to the rear face of the slot 22 of the upper bracket 3; the reference numeral 28 designates the device, having a vertical axis, for transmitting to the front face 26 of the abutment element R the traction force Te of the hook 6 by way of the slider 8, discharge it onto the upper bracket 3 and ultimately onto the rear structure 1 of the tractor: said device is provided with an intermediate cylindrical body 29, an upper prism-like head 30, with flat vertical peripheral faces, a front one 31 and a rear one 32, which belong to the substantially known transmission element T; the reference numeral 33 designates an element for retaining the cylindrical body 29 accommodated in the seat 34, 34a formed within the thickness of the lower part of the slider 8, which is fixed to said body by means of a screw 35; the reference numeral 36 designates an elastic element, which is fitted around the cylindrical body 29 between the internal flat portion 37 of said lower part of the slider 8 and the base of the head 30 in order to keep said head pushed toward the surface 16 of the upper bracket 3; the reference numerals 38, 39, 40 (Figure 8) designate three flat faces, respectively a rear face and two sides, of the opening of the rear part of the slider 8 in which the head 30 of the transmission element T is inserted: the vertical front face 41 of said opening is constituted by a convex sector of a cylinder that has a vertical axis and has for example a radius of approximately 300 mm and mates with the flat front vertical face of the prism-like head 30 in transmitting the towing force between the rear face 32 thereof and the front face 26 of the abutment element R.

In practical execution, the materials, dimensions, constructive details, fastening and sliding means, kinds of actuator, for example conveniently of the hydraulic type, may be different from the ones described, but technically equivalent thereto, without thereby abandoning the juridical domain of the present invention as claimed.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hook-type hitch for trailers, comprising an upper bracket (3), which is substantially horizontal and longitudinal with respect to the ground and is fixed at the rear to the rear structure (1) of the tractor, and a lower bracket (4), which is pivoted by means of a pivot (5) in the front part of said upper bracket, which is provided at the rear with a slider (8) that can be elongated by means of an actuator (10) and supports the shank (7) of the hook (6), said lower bracket being allowed to oscillate between a lower opening position for seeking the eye of the drawbar and an upper closure position for towing while mated with said upper bracket (3) by means of a pair of actuators (13) and hooks (12) for anchoring to the lateral arms (11), said lower bracket (4) being provided with an element (T) for transmitting the towing force that arrives from the slider (8) to an abutment element (R) which is fixed to the upper bracket (3), **characterized in that** said abutment element (R) is constituted by an element that has an L-shaped profile, in which the upper surface (20) of its longer part is mated, by way of at least one fastening means, to the lower face of the surface (16) of the upper bracket (3), its shorter part (21) being directed upward and inserted in a vertical transverse slot (22) of said surface: said shorter part having its vertical rear end face (27) mated with the rear surface of said slot; the reaction force Re being applied to the vertical front face (26) of said abutment element (R) by coupling to the vertical rear surface (32) of the prism-like head (30) of the element (T) for transmitting said force from the hook (6) to the structure (1) of the tractor.

2. The device according to claim 1, **characterized in that** said at least one fastening means is constituted by at least one screw (24), which passes through the hole (23) formed in the surface (16) of the upper bracket (3) in front of the slot (22), and is fastened in the hole (25) of said abutment element (R).

3. The device according to one of claims 1 and 2, **characterized in that** an opening, provided in the thickness of the rear upper part of the slider (8) in order to constitute a seat for the vertical sliding therein of the prism-like head (30) of the element (T) for transmitting the towing force to said abutment element (R), is provided with at least one vertical front face (41), which is constituted by a convex cylindrical sector that has a vertical axis, has a conveniently large radius, and mates in a variable manner with the flat front wall (31) of the prism-like head (30).

## Patentansprüche

1. Hakenartige Anhängerkupplung mit einem oberen Tragarm (3), der im wesentlichen horizontal und in Längsrichtung zum Erdboden verläuft und mit seinem hinteren Ende am hinteren Rahmenbereich (1) des Traktors befestigt ist, und mit einem unteren Tragarm (4), der mittels eines Zapfens (5) am vorderen Bereich des oberen Tragarms schwenkbar gelagert ist und im hinteren Bereich mit einem Läufer (8) ausgerüstet ist, der mittels eines Betätigungsgliedes (10) verlängert werden kann und den Schaft (7) des Hakens (6) trägt, wobei der untere Tragarm dazu ausgebildet ist, sich zwischen einer unteren, geöffneten Position zum Suchen der Zugeinrichtung (Deichsel) und einer oberen, geschlossenen Abschleppposition hin und her zu bewegen, in der er in den oberen Tragarm (3) mittels eines Paars von Betätigungsgliedern (13) und Haken (12) zum Verankern mit den lateralen Armen (11) eingreift, wobei der untere Tragarm (4) mit einem Element (T) zum Übertragen der Abschleppkraft versehen ist, die am Läufer (8) ankommt und zu einem Anschlagelement (R) führt, der an dem oberen Tragarm (3) befestigt ist, **dadurch gekennzeichnet,**
**dass** das Anschlagelement (R) aus einem Element mit L-förmigem Profil besteht, von dem die obere Fläche (20) ihres längeren Teils mittels mindestens eines Befestigungsmittels mit der unteren Fläche (16) des oberen Tragarms (3) zusammenwirkt, wobei ihr kürzeres Teil (21) nach oben gerichtet ist und in einen vertikalen Querschlitz (22) der Fläche eingesteckt wird,
**dass** das kürzere Teil mit seiner vertikalen, hinteren Endfläche (27) an der hinteren Oberfläche des Schlitzes angreift und die Reaktionskraft Re, die auf die vertikale vordere Fläche (26) des Anschlagelementes (R) wirkt, durch Koppeln mit der vertikalen hinteren Fläche (32) des prismenartigen Kopfes (30) des Elementes (T) zur Übertragung der Kraft vom Haken (6) zum Rahmen (1) des Traktors zugeführt wird.

2. Vorrichtung nach Anspruch 1, **dadurch gekennzeichnet, dass** das mindestens eine Befestigungsmittel aus mindestens einer Schraube (24) besteht, die durch das Loch (23) in der Oberfläche (16) des oberen Tragarms (3) auf der Vorderseite des Schlitzes (22) hindurchreicht und in dem Loch (25) des Anschlagelementes (R) befestigt ist.

3. Vorrichtung nach Anspruche 1 oder 2 **dadurch gekennzeichnet, dass** eine Öffnung, die in der Dicke des hinteren oberen Teil des Läufers (8) angeordnet ist, um einen Sitz für das vertikale Verschieben des prismenförmigen Kopfes (30) des Elementes (T) zur Übertragung des Abschleppkraft zu dem Anschlagelement (R) zu bilden, mit mindestens einer vertikalen Vorderfläche (41) versehen ist, die durch einen konvexen zylindrischen Sektor mit einer vertikalen Achse gebildet ist, einen zweckmäßig großen Radius aufweist und in variabler Weise an der flachen Vorderwand (31) des prismenförmigen Kopfes (30) angepasst angreift.

## Revendications

1. Attelage du type à crochet pour des remorques, comprenant une console supérieure (3), qui est sensiblement horizontale et longitudinale par rapport au sol et est fixée à l'arrière à la structure arrière (1) du tracteur, et une console inférieure (4), qui pivote par l'intermédiaire d'un pivot (5) dans la partie avant de ladite console supérieure, et qui est munie à l'arrière d'un coulisseau (8) qui peut s'étendre par l'intermédiaire d'un actionneur (10) et supporte la tige (7) du crochet (6), ladite console inférieure pouvant osciller entre une position d'ouverture inférieure pour chercher l'oeillet de la barre de traction et une position de fermeture supérieure pour le remorquage, tout en étant associée à ladite console supérieure (3) par l'intermédiaire d'une paire d'actionneurs (13) et de crochets (12) pour l'ancrage aux bras latéraux (11), ladite console inférieure (4) étant munie d'un élément (T) pour transmettre la force de remorquage qui provient du coulisseau (8) à un élément de butée (R) qui est fixé à la console supérieure (3),
**caractérisé en ce que** ledit élément de butée (R) est constitué par un élément qui a un profil en forme de L, dans lequel la surface supérieure (20) de son grand côté est associée, par l'intermédiaire d'au moins un moyen d'attache, à la face inférieure de la surface (16) de la console supérieure (3), son petit côté (21) étant dirigé vers le haut et introduit dans une fente transversale verticale (22) de ladite surface : ledit grand côté ayant sa face d'extrémité arrière verticale (27) associée à la surface arrière de ladite fente; la force de réaction Re étant appliquée à la face avant verticale (26) dudit élément de butée (R) par accouplement à la surface arrière verticale (32) de la tête en forme de prisme (30) de l'élément (T) pour transmettre ladite force du crochet (6) à la structure (1) du tracteur.

2. Dispositif selon la revendication 1,
**caractérisé en ce que** ledit moyen d'attache est constitué par au moins une vis (24), qui traverse le trou (23) réalisé dans la surface (16) de la console supérieure (3) devant la fente (22), et est fixée dans le trou (25) dudit élément de butée (R).

3. Dispositif selon l'une des revendications 1 et 2,
**caractérisé en ce qu'**une ouverture, prévue dans l'épaisseur de la partie supérieure arrière du coulisseau (8) afin de constituer une portée pour le coulissement vertical dans celle-ci de la tête en forme de prisme (30) de l'élément (T) pour transmettre la force de remorquage au dit élément de butée (R), est munie d'au moins une face avant verticale (41), qui est constituée par un secteur cylindrique convexe qui a un axe vertical, a un rayon avantageusement grand, et coopère d'une manière variable avec la paroi avant plate (31) de la tête en forme de prisme (30).
